# NEUE EUROPÄISCHE PATENTSCHRIFT

(11) **EP 1 154 875 B2**
(45) Veröffentlichungstag und Bekanntmachung des Hinweises auf die Entscheidung über den Einspruch: **24.10.2007**
(45) Hinweis auf die Patenterteilung: 25.02.2004
(21) Anmeldenummer: 00975966.3
(22) Anmeldetag: 31.10.2000
(51) Int. Cl.: B23K 33/00

(54) **VERFAHREN ZUM VERBINDEN ZWEIER TEILE EINES FAHRZEUGES**
METHOD FOR BINDING TWO PARTS OF A VEHICLE SEAT
PROCEDE D'ASSEMBLAGE DE DEUX PIECES D'UN SIEGE DE VEHICULE

(30) Priorität: 21.12.1999 DE 19961696
(43) Veröffentlichungstag der Anmeldung: 21.11.2001
(73) Patentinhaber: KEIPER GmbH & Co. KG, 67657 Kaiserslautern (DE)
(72) Erfinder: KLEIN, Ralf, 67806 Rockenhausen (DE); KRAUS, Johannes, 66849 Landstuhl (DE)
(74) Vertreter: Patentanwälte Hosenthien-Held und Dr. Held
(86) Internationale Anmeldenummer: PCT/EP2000/010691
(87) Internationale Veröffentlichungsnummer: WO 2001/045894

(56) Entgegenhaltungen:
- US-A- 5 168 841
- US-A- 5 573 345
- US-A- 5 681 086
- US-A- 6 052 901

## Beschreibung

Die Erfindung betrifft ein Verfahren zum Verbinden zweier Teile eines Fahrzeugsitzes mit den Merkmalen des Oberbegriffs des Anspruches 1.

Für ein aus der US 5,573,345 A bekanntes Verfahren dieser Art sind beispielsweise an dem Beschlagoberteil und Beschlagunterteil eines Gelenkbeschlages jeweils zwei vorspringende Facetten in der Form von dreieckigen Pyramidenstümpfen vorgesehen, welche in Aufnahmen eines Adaptionsteiles der Lehnenstruktur bzw. Sitzteilstruktur eingesetzt werden. Das Beschlagteil und das Adaptionsteil werden dann mittels Elektroschweißen verbunden, wobei sie vollständig in Anlage aneinander geraten und das Adaptionsteil sich im Bereich der Aufnahmen an die Form der Facetten anpasst. Von Nachteil ist, dass sich Schweißspritzer bilden können, welche die Funktion des Gelenkbeschlages beeinträchtigen, so dass dieser Ausschuss ausgesondert werden muss.

Die DE 198 13 517 A1 schlägt einen Freiraum zwischen dem Vorsprung und der Wand der Aufnahme vor. Der Freiraum kann seitlich vom Vorsprung oder umlaufend ausgebildet sein und nimmt die Schweißnaht auf.

Der Erfindung liegt die Aufgabe zu Grunde, ein Verfahren der eingangs genannten Art zu verbessern, insbesondere eine Beschädigung von empfindlichen Teilen des Fahrzeugsitzes zu vermeiden. Diese Aufgabe wird erfindungsgemäß durch ein Verfahren mit den Merkmalen des Anspruches 1 gelöst. Vorteilhafte Ausgestaltungen sind Gegenstand der Unteransprüche.

Durch das Verschweißen innerhalb der Aufnahme vertieft gegenüber der vom ersten Teil abgewandten Seite werden Schweißspritzer auf der Außenseite der Teile weitgehend verhindert, insbesondere in die Richtung, in der sich empfindliche Bauteile befinden. Mit der innerhalb der Aufnahme um den Vorsprung herum laufende Schweißnaht wird ein sicherer Zusammenhalt der miteinander zu verbindenden Teile erzielt. Mit der Bildung des Kanals, der durch Einführen des Vorsprungs in die Aufnahme entsteht und innerhalb dessen die Schweißnaht angebracht wird, erhält man eine exakt angeordnete Schweißnaht. Der Kanal wird mittels Fasen, Radien oder dergleichen am Vorsprung und/oder an der Aufnahme gebildet. Vorzugsweise werden die beiden Teile mittels Laserschweißen verbunden. Diese Schweißart ist besonders verzugsarm, es sind aber auch andere Schweißarten möglich.

Durch das Einführen des Vorsprungs in die Aufnahme erfolgt eine Vorpositionierung, die ohne zusätzliche Hilfsmittel auskommt. Zusätzlich können Kräfte übertragen werden, so dass die Schweißnaht ohne große Materialmengen auskommt. Diese Vorpositionierung und -zentrierung, welche für die exakte Anordnung der Schweißnaht vorteilhaft ist, lässt sich dadurch erreichen, dass der Vorsprung und die Aufnahme mit dem gleichen, beispielsweise einem kreisförmigen Querschnitt und geringem, möglichst keinem Spiel versehen sind. Es sind auch andere Querschnitte möglich, beispielsweise Dreiecke.

Im folgenden ist die Erfindung anhand eines in der Zeichnung dargestellten beispielhaften Verfahrensablaufes näher erläutert. Es zeigen
Fig. 1 einen Schnitt durch zwei zu verbindende Teile eines Fahrzeugsitzes vor dem Verbinden, und
Fig. 2 einen Schnitt entsprechend Fig. 1 während des Schweißens.

Bei der Herstellung eines Gelenkbeschlages werden an einem Beschlagteil 1, bei welchem es sich vorliegend um das Beschlagoberteil handelt. durch Umformung des beispielsweise 4 mm dicken Materials zwei Rundnocken 3 herausgedrückt. Die Seite des Beschlagteiles 1. von der aus die Rundnocken 3 abstehen. ist im folgenden als Außenseite bezeichnet.

Die beiden Rundnocken 3 haben näherungsweise die Form von kreiszylindrischen Zapfen mit einem Durchmesser von knapp 10 mm. Die Höhe der Rundnocken 3 über der Außenseite des Beschlagteiles 1 beträgt etwa 2,5 mm. Auf der nach außen gewandten Stirnseite der Rundnocken 3 weisen diese eine erste Fase 5 mit einem Winkel von 45° und einer Höhe von etwa 0,5 mm auf. Gegenüber der Innenseite des Beschlagteiles 1 sind die Rundnocken 3 entsprechend vertieft angeordnet und stimseitig mit einer zweiten Fase 7 versehen, die parallel versetzt zu der ersten Fase 5 mit gleichen Abmessungen ausgebildet ist.

Ein 4 mm dickes, flaches Adaptionsteil 8, welches auf die speziellen Abmessungen der Sitzteilstruktur oder - vorliegend - der Lehnenstruktur abgestimmt ist. weist eine kreisrunde Durchgangsbohrung 10 von gut 10 mm auf. Auf der Außenseite des Adaptionsteiles 8 ist um die Durchgangsbohrung 10 herum eine dritte Fase 12 mit einer Tiefe von etwa 1,25 mm und einem Winkel von 45° vorgesehen, welche die Durchgangsbohrung 10 zur Außenseite hin trichterförmig auf einen Durchmesser von etwa 12,5 mm erweitert.

Zum Verbinden des Beschlagteiles 1 und des Adaptionsteiles 8 werden diese beiden Teile zusammengebracht, und zum Vorzentrieren die als Vorsprung wirkenden Rundnocken 3 in die als Aufnahme wirkenden Durchgangsbohrungen 10 eingeführt, wobei die Einführrichtung nach außen weist. Die Durchmesser der Rundnocken 3 und der Durchgangsbohrungen 10 sind mit ihren Toleranzen so gewählt, daß die Rundnocken 3 ohne Spiel. aber auch ohne Widerstand. in Durchgangsbohrungen 10 eingeführt werden können.

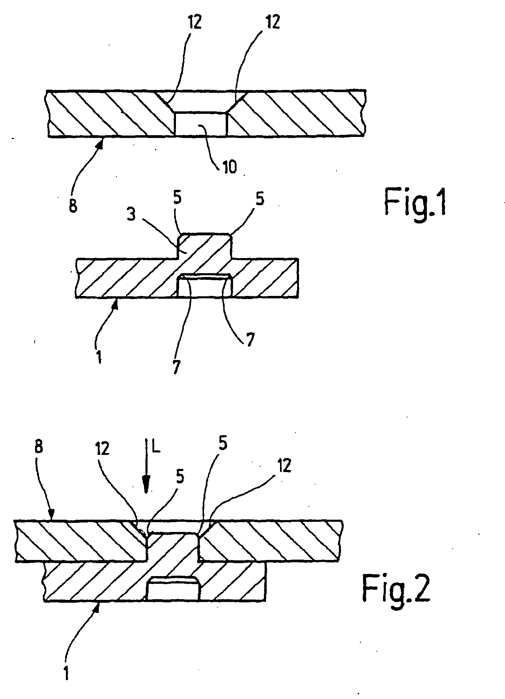

Wenn die Rundnocken 3 vollständig in die Durchgangsbohrungen 10 eingeführt sind, also wenn die Außenseite des Beschlagteiles 1 an der Innenseite des Adaptionsteiles 8 anliegt, bilden bei jedem Rundnocken 3 die erste Fase 5 und die dritte Fase 12 einen um den Rundnocken 3 herum laufenden Kanal, der gegenüber der Außenseite des Adaptionsteiles 8 vertieft in einer Ebene quer zur Einführrichtung angeordnet ist (siehe Fig. 2). In Richtung des Pfeiles L. also entgegen der Einführrichtung und von der Außenseite des Adaptionsteiles 8 her, wird von einem nicht dargestellten Laserschweißgerät ein Laserstrahl auf diesen Kanal gerichtet und innerhalb desselben eine um den Rundnocken 3 herum umlaufende Schweißnaht erzeugt. Dadurch werden das Beschlagteil 1 und das Adaptionsteil 8 verbunden.

## Patentansprüche

1. Verfahren zum Verbinden zweier Teile (1, 8) eines Fahrzeugsitzes, von denen ein erstes Teil (1) wenigstens einen Vorsprung (3) und das zweite Teil (8) wenigstens eine Aufnahme (10) aufweist, wobei die beiden Teile (1, 8) unter Einführen des Vorsprunges (3) in die Aufnahme (10) zusammengebracht und dann auf der vom ersten Teil (1) abgewandten Seite des zweiten Teiles (8) innerhalb der als Durchgangsbohrung ausgebildeten Aufnahme (10) verschweißt werden, **dadurch gekennzeichnet, dass** der Vorsprung (3) und/oder die Aufnahme (10) auf der vom ersten Teil (1) abgewandten Seite eine Fase (5, 12) aufweisen, und dass innerhalb der Aufnahme (10) durch die Fasen (5, 12) ein um den Vorsprung (3) herum laufender Kanal gebildet wird, der gegenüber der vom ersten Teil (1) abgewandten Seite vertieft angeordnet ist und innerhalb dessen eine um den Vorsprung (3) herum laufende Schweißnaht angebracht wird, welche die beiden Teile (1, 8) miteinander verbindet.

2. Verfahren nach Anspruch 1, **dadurch gekennzeichnet, dass** im Bereich der vom ersten Teil (1) abgewandten Seite die Aufnahme (10) sich zu dieser Seite hin trichterförmig erweitert.

3. Verfahren nach Anspruch 1 oder 2, **dadurch gekennzeichnet, dass** die beiden Teile (1, 8) mittels Laserschweißen verbunden werden.

4. Verfahren nach einem der Ansprüche 1 bis 3, **dadurch gekennzeichnet, dass** das Verschweißen zwischen einem als Rundnocken mit kreisförmigem Querschnitt ausgebildeten Vorsprung (3) und einer Aufnahme (10) mit kreisförmigem Querschnitt erfolgt.

5. Verfahren nach einem der Ansprüche 1 bis 3, **dadurch gekennzeichnet, dass** das Verschweißen zwischen einem Vorsprung mit dreieckigem Querschnitt und einer Aufnahme mit dreieckigem Querschnitt erfolgt.

6. Verfahren nach einem der Ansprüche 1 bis 5, **dadurch gekennzeichnet, dass** die Aufnahme (10) den Vorsprung (3) spielfrei aufnimmt.

## Claims

1. Method for connecting two elements (1, 8) of a vehicle seat, of which a first element (1) comprises at least one projection (3) and the second element (8) at least one locator (10), the two elements (1, 8) being joined by inserting the projection (3) into the locator (10) and then welding them on the side of the second element (8) that faces away from the first element (1), within the locator (10) which is configured as a through-hole, **characterised in that** the projection (3) and/or the locator (10) include a bevel (5, 12) on the side that faces away from the first element (1), and that within the locator (10) the bevels (5, 12) form a channel which extends around the projection (3) and is recessed with respect to the side that faces away from the first element (1), and within which a weld is made around the projection (3), said weld joining the two elements (1, 8) together.

2. Method according to claim 1, **characterised in that** in the vicinity of the side that faces away from the first element (1) the locator (10) funnels out towards said side.

3. Method according to claim 1 or 2, **characterised in that** the two elements (1, 8) are joined by means of laser welding.

4. Method according to any of claims 1 to 3, **characterised in that** the welding takes place between a projection (3) configured as a round stub with a circular cross-section and a locator (10) with a circular cross-section.

5. Method according to any of claims 1 to 3, **characterised in that** the welding takes place between a projection with a triangular cross-section and a locator with a triangular cross-section.

6. Method according to any of claims 1 to 5, **characterised in that** the locator (10) receives the projection (3) without freeplay.

## Revendications

1. Procédé pour assembler deux parties (1, 8) d'un siège de véhicule, dont une première partie (1) présente au moins une saillie (3) et la deuxième partie (8) au moins un évidement (10), les deux parties (1, 8) étant réunies avec engagement de la saillie (3) dans l'évidement (10) et, ensuite, soudées sur le côté de la deuxième partie (8) qui est le plus éloigné de la première partie (1) à l'intérieur de l'évidement (10) constitué par un perçage traversant, **caractérisé par le fait que** la saillie (3) et/ou l'évidement (10) présentent un chanfrein (5, 12) sur le côté le plus éloigné de la première partie (1) et qu'à l'intérieur de l'évidement (10) est formé par les chanfreins (5, 12) un canal qui s'étend sur le tour de la saillie (3), qui est disposé en creux par rapport au côté qui est le plus éloigné de la première partie (1) et à l'intérieur duquel est placé un cordon de soudure qui fait le tour de la saillie (3) et qui réunit les deux parties (1, 8) l'une à l'autre.

2. Procédé selon la revendication 1, **caractérisé par le fait que**, dans la région du côté qui est le plus éloigné de la première partie (1), l'évidement (10) s'élargit en entonnoir vers ce côté.

3. Procédé selon l'une des revendications 1 ou 2, **caractérisé par le fait que** les deux parties (1, 8) sont assemblées par soudage au laser.

4. Procédé selon l'une des revendications 1 à 3, **caractérisé par le fait que** le soudage s'effectue entre une saillie (3) réalisée sous la forme d'un bossage rond à section circulaire et un évidement (10) à section circulaire.

5. Procédé selon l'une des revendications 1 à 3, **caractérisé par le fait que** le soudage s'effectue entre une saillie à section triangulaire et un évidement à section triangulaire.

6. Procédé selon l'une des revendications 1 à 5, **caractérisé par le fait que** l'évidement (10) reçoit la saillie (3) sans jeu.
